# EUROPÄISCHE PATENTANMELDUNG

(11) **EP 2 302 334 A1**
(43) Veröffentlichungstag der Anmeldung: **30.03.2011**
(21) Anmeldenummer: 10010984.2
(22) Anmeldetag: 28.09.2010
(51) Int. Cl.: G01F 1/075, G01F 15/14

(54) **Oberteil für einen Durchflussmesser, Durchflussmesser sowie Verfahren zur Herstellung eines Oberteils für einen Durchflussmesser**

(30) Priorität: 29.09.2009 DE 102009043344
(71) Anmelder: AWECO APPLIANCE SYSTEMS GmbH & Co. KG, 88099 Neukirch (DE)
(72) Erfinder: Eichholz , Heinz-Dieter, 58642 Iserlohn (DE); Songwei, Zhao, Pudong New District, Shanghai 200129 (CN); Xiaochun, Jiang, Pudong New District, Shanghai 200126 (CN)
(74) Vertreter: Roth, Klaus

(57) **Zusammenfassung**

Vorgeschlagen wird ein Oberteil für einen Durchflussmesser mit einem Hauptkörper (5), einem Deckteil und einem zwischen Hauptkörper und Deckteil angeordneten Sensor. Um eine erhöhte Sicherheit und eine verbesserte Herstellung zu ermöglichen, umfasst der Hauptkörper einen ersten und einen zweiten Isolationskörper (6, 7), welche mittels eines Kunststoffspritzverfahrens gefertigt sind, wobei der erste Isolationskörper (6) vom zweiten Isolationskörper (7) wenigstens teilweise umschlossen ist und wobei der erste Isolationskörper zur Aufnahme des Sensors ausgebildet ist. Zudem wird ein Durchflussmesser und ein Verfahren zur Herstellung eines Oberteils für einen Durchflussmesser vorgeschlagen.

## Beschreibung

Die Erfindung betrifft ein Oberteil für einen Durchflussmesser nach dem Oberbegriff des Anspruchs 1, einen Durchflussmesser nach dem Oberbegriffs des Anspruchs 12 sowie ein Verfahren zur Herstellung eines Oberteils für einen Durchflussmesser nach dem Oberbegriff des Anspruchs 13.

Aus dem Stand der Technik ist beispielsweise durch die EP 2 056 075 A2 ein Oberteil für einen Durchflussmesser bzw. ein Durchflussmesser bekannt, bei dem zwischen Hauptkörper und Deckteil ein Einsatz angeordnet ist, der den Sensor aufnimmt.

Aufgabe der Erfindung ist es, einen Durchflussmesser, ein Oberteil für ein Durchflussmesser bzw. ein Verfahren zur Herstellung eines Oberteils für einen Durchflussmesser vorzuschlagen, welche eine erhöhte Sicherheit ermöglichen und bei denen die Herstellung verbessert werden kann.

Die Aufgabe wird, ausgehend von einem Oberteil, einem Durchflussmesser bzw. einem Verfahren zur Herstellung eines Oberteils für einen Durchflussmesser der eingangs genannten Art, durch die kennzeichnenden Merkmale der Ansprüche 1, 12 und 13 gelöst.

Durch die in den Unteransprüchen genannten Maßnahmen sind vorteilhafte Ausführungen und Weiterbildungen der Erfindung möglich.

Dementsprechend zeichnet sich ein erfindungsgemäßes Oberteil für einen Durchflussmesser dadurch aus, dass der Hauptkörper einen ersten und einen zweiten Isolationskörper umfasst, welche mittels eines Kunststoffspritzverfahrens gefertigt sind. Dabei umschließt erfindungsgemäß der zweite Isolationskörper den ersten Isolationsköper wenigstens teilweise. Der erste Isolationskörper ist zur Aufnahme des Sensors ausgebildet. Besonders vorteilhaft ist an der Erfindung, dass der Hauptkörper selbst eine doppelte Isolierung aufweist. Ein wie aus dem Stand der Technik bekannter Einsatz, welcher zusätzlich am Hauptkörper des Oberteils gehaltert werden muss, indem zum Beispiel Einrastelemente vorgesehen sind oder indem der Einsatz gesondert verklebt werden muss, ist nicht mehr zwingend notwendig.

Zudem wird durch die Erfindung ermöglicht, dass der Hauptkörper mit der doppelten Isolierung gewissermaßen in einem Prozess hergestellt werden kann bzw. in einem Spritzwerkzeug gefertigt wird, und nicht erst ein separates Bauteil zur Herstellung einer doppelten Isolation produziert werden muss.

Insbesondere wird, wie bereits erwähnt, erfindungsgemäß ebenfalls zwischen spannungsführenden Bauteilen und dem flüssigkeitsdurchflossenen Raum des Durchflussmessers eine doppelte Isolation geschaffen. Ferner kann dadurch verhindert werden, dass sich ein beispielsweise im zweiten Isolationskörper entstehender Haarriss in den ersten Isolationskörper fortsetzt und somit beispielsweise ein Kurzschluss oder eine für den Benutzer gefährliche Situation entsteht. Im Allgemeinen wird so bei einem Schaden am Hauptkörper, welcher entweder nur den ersten oder aber den zweiten Isolationskörper betrifft, nicht sofort die vollständige elektrische Isolierung zerstört. Hierdurch kann die Sicherheit deutlich erhöht werden, während die Wahrscheinlichkeit eines Ausfalls verringert werden kann. Ferner kann sich dadurch auch die Lebenszeit eines derartigen Durchflussmessers bzw. eines entsprechenden Oberteils für einen Durchflussmesser erhöhen.

Grundsätzlich sind solche Durchflussmesser bei der Verwendung im Zusammenhang mit verschiedensten Flüssigkeiten denkbar. Insbesondere finden derartige Durchflussmesser mit flüssigkeitsdurchströmten Kammern beispielsweise Verwendung in flüssigkeitsführenden Haushaltsmaschinen, insbesondere für die Wasserleitung in Kaffeemaschinen, Kaffeeautomaten, -vollautomaten, Geschirrspülern, Waschmaschinen oder dergleichen. Derartige Durchflussmesser können, neben der Verwendung in Kaffeeautomaten auch in anderen Getränkezubereitungsmaschinen oder Getränkeleitungen für beispielsweise Wein, Mineralwasser, Bier usw. zum Einsatz kommen.

Eine typische Ausgestaltung der Sensorik zur Messung des durchgeströmten Flüssigkeitsvolumens besteht darin, die Anzahl der Umdrehungen eines Flügelrades innerhalb des Durchflussmessers zu erfassen und daraus das durchgelaufene Flüssigkeitsvolumen abzuleiten. Eine Möglichkeit besteht beispielsweise darin, innerhalb des Flügelrades bzw. am Flügelrad Magnete bzw. ein Magnetfeld erzeugende Teile anzubringen und in nach Möglichkeit unmittelbarer Nähe des Flügelrades einen Hall-Sensor vorzusehen, womit die Anzahl der Umdrehungen in einer bestimmten Zeiteinheit ermittelt werden kann. Die daraus gewonnene Information über die durchgelaufene Flüssigkeitsmenge ist beispielsweise bei der Kontrolle bzw. Steuerung der Maschine verwendbar.

Bei einer besonders vorteilhaften Ausführung der Erfindung ist der erste Isolationskörper derart vom zweiten Isolationskörper wenigstens teilweise umschlossen, dass eine zerstörungslose Entnahme des ersten Isolationskörpers aus dem zweiten verhindert ist. Gleichfalls könnte auch, wenn erster und zweiter Isolationskörper separat gefertigt worden wären, ein zerstörungsfreies Einsetzen des ersten Isolationskörpers in den zweiten Isolationskörper verhindert sein. Eine solche denkbare Situation könnte z.B. dann vorliegen, wenn man versuchen wollte, aus zwei entsprechenden Oberteilen ein einziges zu machen. Entfernt man in einem Fall den zweiten Isolationskörper etwa durch vorsichtiges Durchschneiden des entsprechenden Kunststoffes und verfährt im anderen Fall analog mit dem ersten Isolationskörper, so können diese beiden daraus erhaltenen Isolationskörper nicht mechanisch ohne Zerstörung zusammengefügt werden. Besonders vorteilhaft ist daran, dass im Falle einer Wartung bzw. eines Austausches von Bauteilen auch wirklich der gesamte die doppelte Isolation bewirkende Hauptkörper ggf. auszutauschen ist. Bei der Verwendung von Einsätzen gemäß dem Stand der Technik wäre es grundsätzlich möglich, den Einsatz zu entnehmen und den entsprechenden Durchflusssensor, etwa den Hall-Sensor, auch ohne Verwendung des Einsatzes und somit ohne doppelte Isolation am Hauptkörper anzubringen. Dies ist jedoch nicht mehr möglich, wenn eine zerstörungslose Entnahme bzw. ein zerstörungsfreies Einsetzen des ersten Isolationskörpers bzgl. des zweiten Isolationskörpers verhindert ist.

Unter anderem kann bei der Verwendung eines Kunststoffspritzverfahrens der erste Isolationskörper vom zweiten Isolationskörper besonders einfach dadurch wenigstens teilweise umschlossen werden, dass der zweite Isolationskörper vom ersten Isolationskörper wenigstens teilweise hinterschnitten ist. In der Regel wird dazu das Spritzwerkzeug zuvor in entsprechender Weise gefertigt.

In einem solchen Fall überdeckt wenigstens ein Teil des zweiten Isolationskörpers den ersten Isolationskörper.

Erster und zweiter Isolationskörper können allerdings auch wenigstens eine Nut-Feder-Verbindung aufweisen. Ferner kann eine entsprechende Nut-Feder-Verbindung als formschlüssige Verbindung ausgebildet sein. Derartige Nut-Feder-Verbindungen ermöglichen eine besonders präzise und ggf. auch vergleichsweise spielfreie Halterung des ersten Isolationskörpers im zweiten Isolationskörper. Diese Nut-Feder-Verbindung kann, ähnlich wie bei einem hinterschnittenen Isolationskörper, in einfacher Weise so ausgebildet sein, dass eine Entnahme des ersten Isolationskörpers nur durch Zerstörung des ersten und/oder zweiten Isolationskörpers möglich ist. Ebenso kann analog dazu ein zerstörungsfreies Einsetzen verhindert werden.

Eine besonders sichere Halterung des ersten Isolationskörpers im zweiten Isolationsköper ist dann gegeben, wenn wenigstens zwei in Bezug auf den ersten Isolationskörper einander gegenüberliegende Nut-Feder-Verbindungen ausgebildet sind. Grundsätzlich können auch zwei in Bezug auf den ersten Isolationskörper einander gegenüberliegende Hinterschneidungen vorhanden sein. Dies verhindert beispielsweise, dass der erste Isolationskörper durch Verkippung ggf. aus dem zweiten Isolationskörper entnommen werden kann. Analog gilt dies auch in Bezug auf ein zerstörungsfreies Einsetzen.

Bei einem besonders vorteilhaften Ausführungsbeispiel kann die Nut-Feder-Verbindung als um den ersten Isolationskörper umlaufender Rand, welcher in eine Nut des zweiten Isolationskörpers eingreift, ausgebildet sein. Dies ermöglicht eine besonders stabile, feste und sichere Halterung des ersten Isolationskörpers im zweiten.

Zumindest dann, wenn die entsprechende Hinterschneidung bzw. die entsprechende Nut-Feder-Verbindung breit genug ausgebildet ist, können entsprechende zerstörungsfreie Entnahmen bzw. ein zerstörungsfreies Einsetzen des ersten in Bezug auf den zweiten Isolationskörper verhindert sein.

Zudem kann bei einer Weiterbildung der Erfindung wenigstens ein Halteelement zur Halterung und/oder Führung des Deckteils am Hauptkörper vorhanden sein. In besonders vorteilhafter Weise könne derartige Halteelemente zur. Erhöhung der Stabilität des Deckteils am Hauptkörper bzw. bei der Fertigung zu einer verbesserten Führung des Deckteils in Bezug auf den Hauptkörper führen.

Insbesondere, um eine besonders dichte Verbindung des Deckteils mit dem Hauptkörper zu gewährleisten, kann das Deckteil mit dem Hauptkörper, insbesondere durch Ultraschall verschweißt sein. Je nach Ausführungsform ist das Deckteil beispielsweise nur mit dem ersten Isolationskörper verschweißt. Ein Verschweißen zeichnet sich insbesondere dadurch aus, dass eine derartige Verbindung auch hinsichtlich Flüssigkeiten eine sehr gute Isolierung bietet.

Grundsätzlich ist es auch denkbar, Deckteil und Hauptkörper bzw. ersten Isolationskörper miteinander zu verkleben.

In vielen Fällen kann es sich bei der Fertigung einer Ausführungsform bzw. einer Weiterbildung der Erfindung anbieten, beim Spritzen ein so genanntes Zwei-Komponenten-Verfahren anzuwenden. Bei einem solchen Verfahren werden in ein und dasselbe Werkzeug zwei verschiedene Kunststoffe eingespritzt.

Insbesondere kann dadurch der erste Isolationskörper aus einem Kunststoff gefertigt sein, während der zweite Isolationsköper aus einem anderen Kunststoff gefertigt ist. Dieses Verfahren ermöglicht, gegebenenfalls in einem Prozessschritt bzw. bei einem Spritzvorgang Teile aus unterschiedlichen Werkstoffen herzustellen. Insbesondere erlaubt dieses Verfahren ebenfalls in vorteilhafter Weise, dass eines der Teile von einem anderen wenigstens teilweise umschlossen wird, wie zum Beispiel der erste Isolationskörper vom zweiten Isolationskörper. Durch diese Maßnahme kann bei der Produktion Zeit eingespart werden. Mit bekannten technischen Möglichkeiten ist außerdem die Fertigung eines Werkzeugs für ein Zwei-Komponenten-Verfahren in der Regel ohne besonderen Aufwand möglich. Somit kann auch eine Reduzierung der Produktionskosten ermöglicht werden.

Grundsätzlich gibt es die Möglichkeit, die Kunststoffe derart zu wählen, dass die aneinander anliegenden Oberflächen über eine physikalische bzw. chemische Verbindung fest miteinander verbunden sind. Ferner ist es möglich, die beiden Kunststoffkomponenten so zu wählen, dass ggf. durch eine Hinterschneidung, durch Ausbildung einer Nut-Feder-Verbindung oder Ähnlichem das eine Teil fest in dem anderen gehaltert ist; das zuletzt genannte Spritzverfahren wird auch mit dem englischen Begriff "Overmolding" bezeichnet.

Dementsprechend zeichnet sich ein erfindungsgemäßer Durchflussmesser dadurch aus, dass ein erfindungsgemäßes Oberteil bzw. eine Ausführungsform oder Weiterbildung eines erfindungsgemäßen Oberteils vorhanden ist. Ober- und Unterteil des Durchflussmessers begrenzen beispielsweise den flüssigkeitsdurchflossenen Raum. Ggf. kann hier auch zum Beispiel ein Flügelrad angeordnet sein, welches sich im Flüssigkeitsstrom mitbewegt und dessen Umdrehungszahl beispielsweise zur Bestimmung des durchgeflossenen Volumens gemessen werden kann.

Ferner zeichnet sich dementsprechend ein Verfahren zur Herstellung eines Oberteils für einen Durchflussmesser mit einem Hauptkörper, einem Deckteil und einem zwischen Hauptkörper und Deckteil angeordneten Sensor, wobei der Hauptkörper einen ersten und einen zweiten Isolationskörper umfasst, der erste Isolationskörper vom zweiten Isolationskörper wenigstens teilweise umschlossen ist und wobei der erste Isolationskörper zur Aufnahme des Sensors ausgebildet ist, dadurch aus, dass folgende Verfahrensschritte vorgesehen sind:
a) Spritzen des ersten Isolationskörpers,
b) Spritzen des zweiten Isolationskörpers.

### Ausführungsbeispiel

Ein Ausführungsbeispiel der Erfindung ist in der Zeichnung dargestellt und wird nachstehend anhand der folgenden Figuren unter Angabe weiterer Einzelheiten und Vorteile näher erläutert.

Im Einzelnen zeigen:
- Fig. 1:: einen schematischen Schnitt durch einen Durchflussmesser,
- Fig. 2:: einen schematischen Schnitt durch den Hauptkörper des Oberteils des Durchflussmessers sowie
- Fig. 3:: eine perspektivische Ansicht des Durchflussmessers.

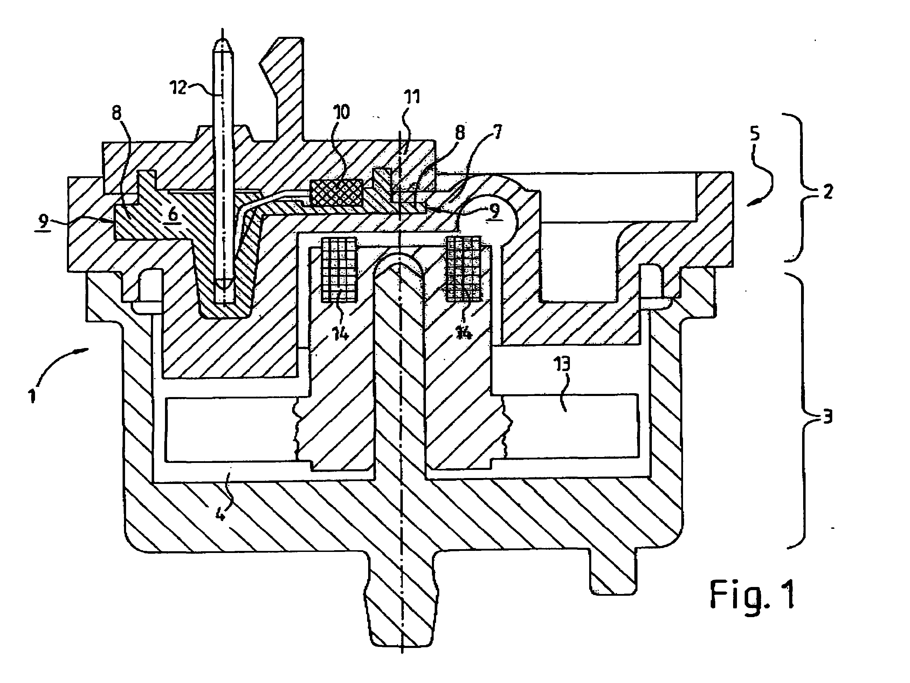

Figur 1 zeigt eine schematischen Schnitt durch einen Durchflussmesser 1 mit einem Oberteil 2 und einem Unterteil 3. Ober- und Unterteil 2, 3 umschließen den flüssigkeitsdurchflossenen Raum 4. Ferner umfasst das Oberteil 2 einen Hauptkörper 5. Der Hauptkörper 5 wiederum setzt sich zusammen aus zwei Isolationskörpern, einem ersten Isolationskörper 6 sowie einem zweiten Isolationskörper 7. Der Hauptkörper mit den beiden Isolationskörpern wird in einem sogenannten Zweikomponenten-Verfahren hergestellt. Bei einem derartigen Produktionsverfahren handelt es sich um ein Kunststoffspritzverfahren, bei dem zur Herstellung des Hauptkörpers nur ein einziges Werkzeug benötigt wird. In dieses Spritzwerkzeug werden zwei verschiedene Kunststoffe (zwei Komponenten) eingespritzt. Der zweite Isolationskörper 6 wird dabei vom ersten Isolationskörper 7 hinterschnitten.

Im vorliegenden Ausführungsbeispiel ist ein umlaufender Rand 8 vorhanden, der im Sinne einer Nut-Feder-Verbindung in eine Nut 9 des zweiten Isolationsköpers 7 eingreift. Es ist daher nicht mehr möglich, zerstörungsfrei den ersten Isolationskörper 6 aus dem zweiten Isolationskörper 7 zu entnehmen. Würde man aus einem anderen Durchflussmesser, beispielsweise durch Zerstörung des entsprechenden zweiten Isolationskörpers versuchen, den ersten Isolationskörper zu isolieren, ohne diesen dabei selbst zu zerstören, so wäre es nicht mehr möglich, diesen ersten Isolationskörper in einen entsprechenden zweiten Isolationskörper, der ersten Isolationskörper nicht mehr umfasst, einzusetzen bzw. hineinzudrücken, ohne nicht wenigstens einen von beiden zu zerstören.

Der erste Isolationskörper 6 dient ferner zur Aufnahme eines Hall-Sensors 10. Auf den ersten Isolationskörper 6 ist ein Deckteil 11 aufgesetzt und verschweißt (ultraschallverschweißt). Durch den Deckel 11 sind entsprechende Anschlussstifte zur elektrischen Kontaktierung 12 des Hall-Sensors 10 durchgeführt.

Innerhalb des flüssigkeitsdurchflossenen Raums 4 ist ein Flügelrad 13 angeordnet. Dieses trägt Permanentmagnete 14.

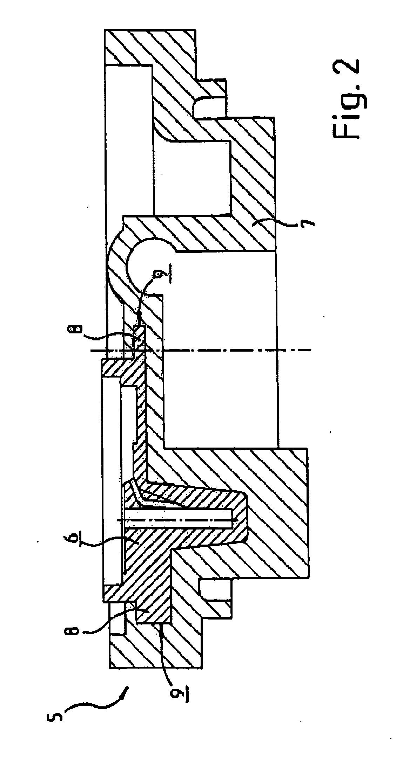

Figur 2 zeigt im Übrigen noch einmal einen schematischen Schnitt durch den Hauptkörper 5 des Oberteils 2 mit erstem und zweitem Isolationskörper 6, 7.

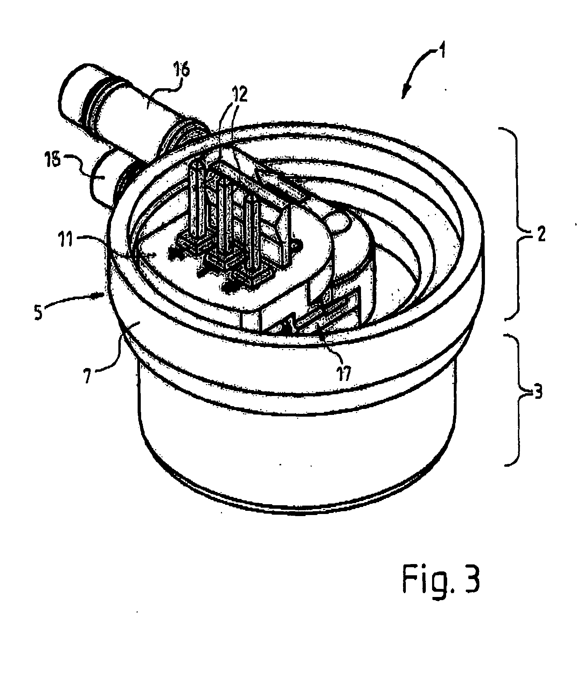

Wie in Figur 3 dargestellt, umfasst das Unterteil 3 ferner einen Einlass 15, während das Oberteil 2 bzw. der Hauptkörper 5 einen Auslass 16 besitzt. Hierdurch wird die entsprechende Flüssigkeit in den Durchflussmesser geleitet und kann auch aus diesem wieder heraufließen. Des Weiteren sind Ein- und Auslass so angeordnet, dass die durchströmende Flüssigkeit das Flügelrad 13 antreibt. Die dabei mitrotierenden Permanentmagnete 14 erzeugen ein magnetisches Wechselfeld, welches über den Hall-Sensor detektiert wird und mit dem die Umdrehungszahl des Flügelrades bei durchströmender Flüssigkeit bestimmt werden kann. Auf diese Weise lässt sich das durchgeflossene Volumen bestimmen. Ferner besitzt das Deckteil 11 entsprechende Führungs- und Halteelemente 17. Besonders vorteilhaft ist an dem dargestellten Durchflussmesser 1, dass der Hauptkörper 5 eine doppelte Isolierung aufweist.

### Bezugszeichenliste:

- 1: Durchflussmesser
- 2: Oberteil
- 3: Unterteil
- 4: durchflossener Raum
- 5: Hauptkörper
- 6: erster Isolationskörper
- 7: zweiter Isolationskörper
- 8: Rand
- 9: Nut
- 10: Hall-Sensor
- 11: Deckteil
- 12: Kontaktstift
- 13: Flügelrad
- 14: Permanentmagnete
- 15: Einlass
- 16: Auslass
- 17: Halte-/FÜhrungselemente

## Patentansprüche

1. Oberteil (2) für einen Durchflussmesser (1) mit einem Hauptkörper (5), einem Deckteil (11) und einem zwischen Hauptkörper und Deckteil angeordneten Sensor (10), **dadurch gekennzeichnet, dass** der Hauptkörper einen ersten und einen zweiten Isolationskörper (6, 7) umfasst, welche mittels eines Kunststoffspritzverfahrens gefertigt sind, wobei der erste Isolationskörper (6) vom zweiten Isolationskörper (7) wenigstens teilweise umschlossen ist und wobei der erste Isolationskörper zur Aufnahme des Sensors ausgebildet ist.

2. Oberteil für einen Durchflussmesser nach einem der vorgenannten Ansprüche, **dadurch gekennzeichnet, dass** eine zerstörungslose Entnahme des ersten Isolationskörpers aus dem zweiten Isolationskörper verhindert ist.

3. Oberteil für einen Durchflussmesser nach einem der vorgenannten Ansprüche, **dadurch gekennzeichnet, dass** ein zerstörungsfreies Einsetzen des ersten Isolationskörpers in den zweiten Isolationsköper verhindert ist.

4. Oberteil für einen Durchflussmesser nach einem der vorgenannten Ansprüche, **dadurch gekennzeichnet, dass** der zweite Isolationskörper vom ersten Isolationskörper wenigstens teilweise hinterschnitten ist.

5. Oberteil für einen Durchflussmesser nach einem der vorgenannten Ansprüche, **dadurch gekennzeichnet, dass** der erste und zweite Isolationskörper über wenigstens eine Nut-Feder-Verbindung (8, 9) miteinander verbunden sind.

6. Oberteil für einen Durchflussmesser nach einem der vorgenannten Ansprüche, **dadurch gekennzeichnet, dass** die Nut-Feder-Verbindung als formschlüssige Verbindung ausgebildet ist.

7. Oberteil für einen Durchflussmesser nach einem der vorgenannten Ansprüche, **dadurch gekennzeichnet, dass**
wenigstens zwei in Bezug auf den ersten Isolationskörper einander gegenüber liegende Nut-Feder-Verbindungen ausgebildet sind.

8. Oberteil für einen Durchflussmesser nach einem der vorgenannten Ansprüche, **dadurch gekennzeichnet, dass** die Nut-Feder-Verbindung als um den ersten Isolationskörper umlaufender Rand (8), welcher in eine Nut (9) des zweiten Isolationskörpers eingreift, ausgebildet ist.

9. Oberteil für einen Durchflussmesser nach einem der vorgenannten Ansprüche, **dadurch gekennzeichnet, dass** Halte- und/oder Führungselemente (17) zur Halterung und/oder Führung des Deckteils am Hauptkörper vorhanden sind.

10. Oberteil für einen Durchflussmesser nach einem der vorgenannten Ansprüche, **dadurch gekennzeichnet, dass** der erste Isolationskörper (6) mit dem Deckteil (11) verschweißt, insbesondere ultraschallverschweißt ist.

11. Oberteil für einen Durchflussmesser nach einem der vorgenannten Ansprüche, **dadurch gekennzeichnet, dass** der erste und zweite Isolationskörper (6, 7) aus unterschiedlichen Kunststoffen gefertigt sind.

12. Durchflussmesser (1) mit einem Unterteil und einem Oberteil, **dadurch gekennzeichnet, dass** das Oberteil nach einem der vorgenannten Ansprüche ausgebildet ist.

13. Verfahren zur Herstellung eines Oberteils (2) für einen Durchflussmesser (1) mit einem Hauptkörper (5), einem Deckteil (11) und einem zwischen Hauptkörper und Deckteil angeordneten Sensor (10), wobei der Hauptkörper einen ersten und einen zweiten Isolationskörper umfasst, der erste Isolationskörper (6) vom zweiten Isolationskörper (7) wenigstens teilweise umschlossen ist und wobei der erste Isclationskörper zur Aufnahme des Sensors ausgebildet ist, umfassend folgende Verfahrensschritte:
a) Spritzen des ersten Isolationskörpers,
b) spritzen des zweiten Isolationskörpers.

14. Verfahren nach einem der vorgenannten Ansprüche, **dadurch gekennzeichnet, dass** die Verfahrensschritte:
a) Spritzen des ersten Isolationskörpers,
b) Spritzen des zweiten Isolationskörpers
zeitlich aufeinander folgen.

15. Verfahren nach einem der vorgenannten Ansprüche, **dadurch gekennzeichnet, dass** eine zerstörungslose Entnahme des ersten Isolationskörpers aus dem zweiten Isolationskörper verhindert wird.

16. Verfahren nach einem der vorgenannten Ansprüche, **dadurch gekennzeichnet, dass** ein zerstörungsloses Einsetzen des ersten Isolationskörpers in den zweiten Isolationskörper verhindert wird.

17. Verfahren nach einem der vorgenannten Ansprüche, **dadurch gekennzeichnet, dass** zum Spritzen des ersten und zweiten Isolationskörpers eine einzige Spritzform verwendet wird, in welche der Kunststoff für den ersten und zweiten Isolationskörper ohne zwischenzeitliches Öffnen der Spritzform eingespritzt wird.

18. Verfahren nach einem der vorgenannten Ansprüche, **dadurch gekennzeichnet, dass** das Spritzen des ersten und zweiten Isolationskörpers als Zwei-Komponenten-Spritzverfahren ausgebildet sind.

19. Verfahren nach einem der vorgenannten Ansprüche, **dadurch gekennzeichnet, dass** das Deckteil mit dem ersten Isolationskörper verschweißt, insbesondere ultraschallverschweißt wird.
